# EUROPEAN PATENT APPLICATION

(11) **EP 1 505 391 A1**
(43) Date of publication of application: **09.02.2005**
(21) Application number: 03733687.2
(22) Date of filing: 14.05.2003
(51) Int. Cl.: G01N 33/49

(54) **METHOD FOR DIAGNOSING MALIGNANT NEOPLASMS**

(30) Priority: 14.05.2002 RU 2002112453
(71) Applicant: Shatokhina, Svetlana Nikolaevna, Moscow, 129327 (RU); SHABALIN, Vladimir Nikolaevich, Moscow, 129301 (SU); Vasiliadis, Anastasios Alexandros, Moscow, 129085 (RU)
(72) Inventor: SHATOKHINA, Svetlana Nikolaevna, Moscow, 129327 (RU); SHABALIN, Vladimir Nikolaevich, Moscow, 129301 (RU)
(74) Representative: HOFFMANN - EITLE
(86) International application number: PCT/RU2003/000215
(87) International publication number: WO 2003/096013

(57) **Abstract**

The invention relates to the field of medicine, namely, to laboratory investigations, and may be used for and may be used for pre-clinical revealing the presence of a marker for malignant growth, and also for revealing the early stage of a malignant neoplasm. Blood serum of a patient is examined in polarized light, and upon revealing anisotropic spherulites with fine individual varicolored inclusions or anisotropic spherulites with pronounced varicolored inclusions in the central part thereof the presence of the pre-clinical stage of malignant growth or the early stage of a malignant neoplasm is diagnosed, respectively.

## Description

### Field of the Invention

The present invention relates to medicine and more particularly to laboratory investigations, and may be used for pre-clinical revealing the presence of a marker for malignant growth, and also for revealing the early stage of a malignant neoplasm.

### State of the Art

At present an increase in is observed in the number of patients with malignant neoplasms of various organs and tissues. This situation is associated with many factors: an increase of the overall radiation background of the Earth, deterioration of the external ecological situation, of the endoecological environment, and many other factors, causing, on the whole, lowering of the organism immunity and ability of mutated cells to progressing malignant growth.

It is known that revealing patients with early stages of malignant growth is difficult. As a rule, oncological patients come to consult a doctor, when they have complaints (of pain, bleeding, deformation of a tissue or organ, etc.), this being indicative of a developed clinical picture of a disease and leading to an unfavorable outcome of treatment. Success in treating oncological patients depends on the stage of malignant growth: the earlier the process is revealed, the more effective the result of therapy is. This can be inferred from the data of cytological investigations of diverse biological material (biological fluids, imprints, scrapes from malignization-suspicious portions of tissues), especially when carrying out prophylactic inspections of large contingents.

Known in the art is a method for revealing structural inhomogeneities in biological tissues with the aid of liquid crystals (RU 2166194, publ. 2001), wherein it is proposed to treat a section of tissue with a solution of a nematic crystal, and, on detecting various tissue areas not decorated therewith, to diagnose the presence of malignant tumor elements in the tissue.

This method is disadvantageous in being highly invasive, in the possibility of revealing a disease only at its clinical stage.

Known in the art is a multiparameter method for diagnosing malignant neoplasms (RU 98112260, publ. 2000), which comprises determining the time of longitudinal nuclear magnetic resonant relaxation in blood serum, quantitative evaluation of homeostasis disturbance from the data of biophysical, hematological and biochemical analyses, the presence of a malignant neoplasm being judged from such evaluation.

A disadvantage of this method is its technical complexity, the impossibility of using it in clinical laboratories of hospitals, difficulty in revealing an early stage of malignant growth.

The closest analog of the claimed invention is a method for diagnosing malignant neoplasms, comprising sampling blood serum, drying it at room temperature, followed by investigating the serum (RU 2140638, publ. 1999). It is proposed to dehydrate the resulting dried serum in vacuum of 0.6 kPa at a temperature of 110―130°C and to carry out investigation by differential thermal analysis.

A disadvantage of this method is a high laboriousness of preparing blood serum for subsequent analysis and the very procedure of carrying out investigations, feasible only at special centers provided with necessary equipment. Besides, the proposed method does not allow diagnosing with sufficient precision malignant growth at early and, especially, pre-clinical stages of the disease.

### Essence of the Invention

It is an object of the present invention to eliminate the above-indicated disadvantages and to provide such a method of diagnosing, which would allow reliable revealing of the initial stage of malignant growth in the organism of an individual being examined.

For this object to be accomplished, it is proposed in a method for diagnosing malignant neoplasms, comprising sampling blood serum, drying thereof at room temperature, followed by investigating said serum, to apply about 0.01―0.02 ml of blood serum to an object-plate, to carry out drying the serum under a cover glass at a relative humidity of about 55―60% for approximately 72―96 hours. The microscopic examination of said serum should be carried out in polarized light. On revealing anisotropic spherulites with fine individual varicolored inclusions in the central part of the spherulite, the pre-clinical stage of a malignant growth in the organism should be diagnosed, and on revealing anisotropic spherulites with pronounced colored inclusions, the early stage of a malignant neoplasm should be diagnosed.

So, one of the aspects of the present invention is a marker of the malignant neoplasm, comprising an anisotropic spherulite with varicolored inclusions in the central part thereof, visible in polarized-light microscopy, said spherulite being formed as a result of drying blood serum. The marker according to the first aspect of the invention makes it possible to diagnose the pre-clinical stage of malignant growth, if said spherulite contains individual fine varicolored inclusions in its central part. Moreover, the marker according to the invention makes it possible to diagnose the early stage of a malignant neoplasm, if said spherulite contains pronounced varicolored inclusions in its central part.

The marker according to the first aspect of the invention is preferably formed on an object-plate when drying about 0.01―0.02 ml of blood serum, the drying being carried out under a cover glass for approximately 72―96 hours at a relative humidity of about 35―100%.

Another aspect of the present invention is a method for obtaining a malignant neoplasm marker, comprising the steps of: (a) isolating the blood serum of a patient; (b) drying said serum at room temperature under conditions providing for the formation of an anisotropic spherulite with varicolored inclusions in the central part thereof, visible in polarized-light microscopy.

Preferably, in said method in step (b) about 0.01―0.02 ml of blood serum should be dried, and said drying should be carried out on an object-plate under a cover glass for approximately 72―96 hours at a relative humidity of about 55―100%.

Said method makes it possible to obtain an anisotropic spherulite with individual varicolored inclusions in the central part thereof, and also an anisotropic spherulite with pronounced varicolored inclusions in the central part thereof.

Another aspect of the present invention is a method for analyzing blood serum for revealing an anisotropic spherulite with varicolored inclusions in the central part thereof, comprising the steps of: (a) isolating blood serum; (b) placing the serum under a cover glass on an object-plate; (c) drying the serum at room temperature for approximately 72―96 hours at a relative humidity of about 55―100%; (d) microscopic examination of the product of blood serum drying, obtained in step (c) in polarized light; (e) revealing anisotropic spherulites with varicolored inclusions in the central part thereof.

Said method makes it possible to reveal in step (e) an anisotropic spherulite with individual fine varicolored inclusions in the central part thereof or an anisotropic spherulite with pronounced varicolored inclusions in the central part thereof, and, correspondingly, to diagnose the pre-clinical stage of malignant growth and the early stage of a malignant neoplasm.

Still another aspect of the present invention is a method for diagnosing a malignant neoplasm, comprising the steps of: (a) sampling blood serum; (b) drying said serum at room temperature; (c) microscopic examination of the product of blood serum drying, obtained in step (b) in polarized light; (d) revealing anisotropic spherulites with varicolored inclusions in the central part of said spherulites; (e) diagnosing a malignant neoplasm upon revealing said anisotropic spherulites.

In said method preferably in step (b) about 0.01―0.02 ml of blood serum is dried under a cover glass on an object-plate; and the drying as such is carried out for approximately 72―96 hours at a relative humidity of about 55―60%.

Said method allows, upon revealing anisotropic spherulites with individual fine varicolored inclusions, diagnosing the pre-clinical stage of malignant growth, and upon revealing anisotropic spherulites with pronounced varicolored inclusions, diagnosing the early stage of a malignant neoplasm.

### Brief Description of the Drawings

Figure 1 shows a spherulite of blood serum of a healthy human.
Figures 2 and 3 show spherulites of blood serum of different patients with the initial - pre-clinical ― stage of malignant growth.
Figure 4 shows a spherulite of blood serum of a patient with a clinically pronounced malignant tumor at the early stage.

The invention will be further explained on particular clinical examples.

### Example 1

Female patient P., aged 52. Makes no complaints. Earlier (15 years ago) the patient underwent an operation for adenocarcinoma of the rectum.

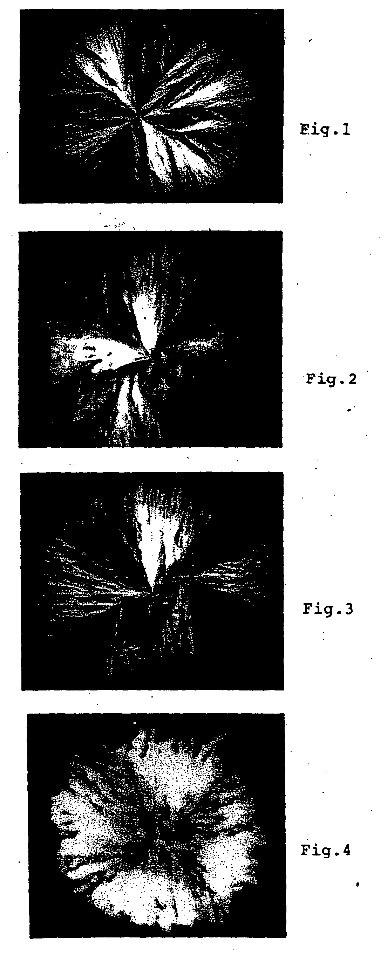

After sampling the patient's blood serum, 0.01―0.02 ml thereof was taken and a drop of the serum was applied to the surface of an object-plate-with the help of a semiautomatic sampler, covered with a cover glass, and dried at a temperature of 18―30°C and relative humidity of 55―60% for 72―96 hours. Microscopic examination of the blood serum revealed anisotropic spherulites without colored inclusions, monomorphic in color (Fig. 1).

Conclusion: malignant growth markers are not detected.

Clinical-laboratory examination has not revealed signs of oncological disease relapse.

### Example 2

Female patient D., aged 62. Makes no complaints.

Upon examination of the patient's blood serum by the above-indicated method, individual spherulites of safe form with the presence of colored inclusions at the center were found (Fig. 2).

Conclusion: malignant growth markers are detected.

The patient was directed with suspicions of a malignant process with unclear localization to an oncologist for thorough examination.

Conclusion of the clinical-laboratory examination of the patient: fibrocystic mastopathy. Further supervision by a mammologist is recommended.

Six months later symptoms of malignant lesion of the right mammary gland - squamous cell carcinoma of the left mammary gland (revealed for the first time) - were found in the patient.

### Example 3

Male patient Zh., aged 66. Complains of periodic heart pains. Has been suffering from prostatic adenoma for 5 years.

Upon examination of the patient's blood serum by the indicated method, several anisotropic spherulites of safe form with the presence of an individual fine colored inclusion at the center were revealed (Fig. 3).

Conclusion: markers of an early stage of malignant growth are found.

The patient was thoroughly examined under in-patient conditions, but a malignant neoplasm was not detected, and further supervision by an urologist for a benign process of prostatic adenoma was recommended. 8.5 months after the examination of the patient's blood serum by the proposed method and the conclusion about the onset of malignant growth, clinical symptoms of a malignant neoplasm - prostatic adenocarcinoma - were revealed in the patient.

### Example 4

Female patient P., aged 56. Makes no complaints.

Upon examination of the patient's blood serum by the indicated method, several anisotropic spherulites of safe form with the presence of pronounced colored inclusions at the center were revealed (Fig. 4).

Conclusion: malignant growth markers are found.

The patent with suspicions of a malignant process with unclear localization was directed to an oncologist for thorough examination.

Conclusion of the clinical-laboratory examination of the patient: cancer of the right mammary gland (revealed for the first time).

### Industrial Applicability

The proposed methods and markers can be used in screening blood sera of all hospital and polyclinical patients undergoing obligatory laboratory examination.

Said methods and markers make it possible to actively reveal patients with early stages of malignant growth, thorough examine them, and timely effect successful treatment.

## Claims

1. A marker for a malignant neoplasm, comprising an anisotropic spherulite with varicolored inclusions in the central part thereof, visible in polarized-light spectroscopy, said spherulite being formed as a result of drying blood serum.

2. The marker according to claim 1, for diagnosing the pre-clinical stage of malignant growth, comprising individual fine varicolored inclusions in said central part.

3. The marker according to claim 1, for diagnosing the early stage of malignant growth, comprising individual fine varicolored inclusions in said central part.

4. The marker according to claim 1, which is formed on an object-plate when drying about 0.01―0.02 ml of blood serum.

5. The marker according to claim 4, which is formed on an object-plate and under a cover glass.

6. The marker according to claim 4, which is formed when drying blood serum for approximately 72―96 hours at a relative humidity of about 55―100%.

7. A method for producing a marker for a malignant neoplasm, comprising the steps of:
(a) isolating a patient's blood serum;
(b) drying said serum at room temperature under conditions providing for the formation of an anisotropic spherulite with varicolored inclusions in the central part thereof, visible in polarized-light spectroscopy.

8. A method according to claim 7, wherein in step (b) about 0.01―0.02 ml of blood serum is dried, and said drying is carried out on an object plate under a cover glass.

9. A method according to claim 8, wherein said drying is carried out for approximately 72― 96 hours and at a relative humidity of about 55―100%.

10. A method according to claim 7, wherein an anisotropic spherulite with varicolored inclusions in the central part thereof is obtained.

11. A method according to claim 7, wherein an anisotropic spherulite with pronounced varicolored inclusions in the central part thereof is obtained.

12. A method for analyzing blood serum for revealing an anisotropic spherulite with varicolored inclusions in the central part thereof, comprising the steps of:
(a) isolating blood serum;
(b) placing said serum under a cover glass on an object- plate;
(c) drying said serum at room temperature for approximately 72―96 hours at a relative humidity of about 55―100%;
(d) microscopic examination of the blood serum drying product obtained in step (c) in polarized light;
(e) revealing anisotropic spherulites with varicolored inclusions in the central part thereof.

13. A method according to claim 12, wherein in step (e) an anisotropic spherulite is revealed with individual fine inclusions in the central part of said anisotropic spherulite.

14. A method according to claim 13, wherein in step (e) an anisotropic spherulite is revealed with expressed colored inclusions in the central part of said anisotropic spherulite.

15. A method for diagnosing a malignant neoplasm, comprising the steps of:
(a) sampling blood serum;
(b) drying said serum at room temperature;
(c) microscopic examination of the product of drying, obtained in step (b), in polarized light;
(d) revealing anisotropic spherulites with varicolored inclusions in the central part of said spherulites;
(e) diagnosing a malignant neoplasm upon revealing said anisotropic spherulites.

16. A method according to claim 15, wherein in step (b) about 0.01―0.02 ml of blood serum is dried under a cover glass on an object-plate.

17. A method according to claim 16, wherein drying is carried out for approximately 72―96 hours at a relative humidity of about 55―60%.

18. A method according to claim 15, wherein upon revealing anisotropic spherulites with individual fine varicolored inclusions the pre-clinical stage of malignant growth is diagnosed.

19. A method according to claim 15, wherein upon revealing anisotropic spherulites with pronounced varicolored inclusions the early stage of a malignant neoplasm is diagnosed.
